# EUROPÄISCHE PATENTSCHRIFT

(11) **EP 3 411 578 B1**
(45) Veröffentlichungstag und Bekanntmachung des Hinweises auf die Patenterteilung: **29.06.2022**
(21) Anmeldenummer: 16828914.8
(22) Anmeldetag: 22.12.2016
(51) Int. Cl.: F02D 41/00, F02D 41/14, F02D 41/22, F02P 17/12, F02D 35/02

(54) **BRENNKRAFTMASCHINE**
INTERNAL COMBUSTION ENGINE
MOTEUR À COMBUSTION INTERNE

(30) Priorität: 29.12.2015 AT 511122015
(43) Veröffentlichungstag der Anmeldung: 12.12.2018
(73) Patentinhaber: Innio Jenbacher GmbH & Co OG, 6200 Jenbach (AT)
(72) Erfinder: FRÖHLICH, Moritz, 6071 Aldrans (AT); HUBER, Johannes, 6233 Kramsach (AT); SCHAUMBERGER, Herbert, 6232 Münster (AT); ZÖGGELER, Klaus, 6370 Kitzbühel (AT)
(74) Vertreter: Torggler & Hofmann Patentanwälte - Innsbruck
(86) Internationale Anmeldenummer: PCT/AT2016/060134
(87) Internationale Veröffentlichungsnummer: WO 2017/112970

(56) Entgegenhaltungen:
- EP-A1- 2 803 966
- DE-A1- 3 933 826
- DE-A1- 19 750 636
- DE-A1-102014 200 360
- JP-A- 2014 227 975
- JP-B2- 5 004 034

## Beschreibung

Die vorliegende Erfindung betrifft eine Brennkraftmaschine mit den Merkmalen des Anspruchs 1 und ein Verfahren zur Überprüfung des Zustands eines wenigstens einem Brennraum einer Brennkraftmaschine zugeordneten Zündverstärkers mit den Merkmalen des Anspruchs 12.

Die DE 10 2014 200360 A1 befasst sich mit Verbrennungsmotoren für Kraftfahrzeuge, wobei durch Verändern des Lambda-Werts für einzelne Zylinder eine Zylinder-Imbalance aufgedeckt werden soll, wobei verschiedene Zylinder unwissentlich bei verschiedenen Lambda-Werten betrieben werden, aber an der gemeinsamen LambdaSonde der Korrekte Lambda-Wert gemessen wird.

In der JP 5 004034 B2 wird der Zustand von Zündkerzen überprüft, indem Fehlzündungsereignisse über einen Zeitraum hin erfasst werden und aufgrund deren relativer Häufigkeit auf den Zustand der Zündkerzen geschlossen wird.

Die DE 39 33 826 A1 offenbart ein Verfahren zum Erkennen von Zylindern, in denen keine Zündung stattfindet, wobei sukzessive die Kraftstoffzufuhr zu einzelnen Zylindern unterbrochen wird, um den nicht-zündenden Zylinder zu identifizieren.

Die US 8,290,687 B2 beschreibt ein Verfahren zur Bestimmung einer in einen Brennraum einer Brennkraftmaschine eingebrachten Dieselmenge.

In der JP2014227975 A wird eine Vorrichtung zur Erfassung eines anormalen Zustands eines Kraftstoffeinspritzsystems offenbart.

Die Erfindung kommt bei im Magerbetrieb betriebenen Brennkraftmaschinen zum Einsatz. Es ist bekannt, dass sich der Zustand eines Zündverstärkers über längere Zeit graduell verschlechtern (und in diesem Sinne abnormal werden) kann.

Aufgabe der Erfindung ist es, eine Früherkennung eines sich anbahnenden Fehlerbildes des Zündverstärkers durchführen zu können.

Diese Aufgabe wird durch eine Brennkraftmaschine mit den Merkmalen des Anspruchs 1 und ein Verfahren mit den Merkmalen des Anspruchs 12 gelöst. Vorteilhafte Ausführungsformen der Erfindung sind in den abhängigen Ansprüchen definiert.

Durch die Erfindung wird durch eine gezielte Änderung der Luftüberschusszahl des Kraftstoff-Luft-Gemisches für den wenigstens einen Brennraum ein Zustand herbeigeführt, bei welchem ein korrekt oder zumindest noch akzeptabel funktionierender Zündverstärker eine Zündung des Kraftstoff-Luft-Gemisches herbeiführen kann. Funktioniert der Zündverstärker nicht mehr korrekt bzw. akzeptabel, so führt die absichtlich in eine einer Zündung abträglichen Richtung geänderte Luftüberschusszahl zu einem auffällig verlaufenden Verbrennungsereignis oder es findet überhaupt keine Verbrennung statt. Dies wird als Zeichen für einen abnormalen Zustand des Zündverstärkers interpretiert.

Erfindungsgemäß kann der Zündverstärker als Zündkerze ausgebildet sein. Diese kann im Brennraum selbst oder in einer dem Brennraum zugeordneten Vorkammer angeordnet sein. Durch die Erfindung ist es möglich, eine Verschlechterung der Zündwirkung (z. B. durch Ablagerungen, Veränderungen der Elektrodengeometrie, Veränderungen der Geometrie einer mit der Zündkerze verbundenen Leiteinrichtung oder andere Verschleiß- oder Alterungserscheinungen) frühzeitig zu detektieren.

Erfindungsgemäß kann vorgesehen sein, dass der Zündverstärker eine Einbringvorrichtung für Kraftstoff oder ein Kraftstoff-Luft-Gemisch aufweist und vorzugsweise als Vorkammer oder Injektor für einen flüssigen Kraftstoff (z. B. Diesel oder ein anderer selbstzündfähiger Kraftstoff) ausgebildet ist. In diesem Fall ist es möglich, eine Verschlechterung der Zündwirkung der Vorkammer oder des Injektors (z. B. durch Ablagerungen, Veränderungen der Vorkammer- oder Injektorgeometrie, Veränderungen der Geometrie einer mit der Vorkammer oder dem Injektor verbundenen Leiteinrichtung oder andere Verschleiß- oder Alterungserscheinungen) frühzeitig zu detektieren.

Besonders bei großen Brennkraftmaschinen kann es zur sicheren Entzündung des Kraftstoff-Luft-Gemisches im Brennraum hilfreich sein, den Zündverstärker als Vorkammer auszubilden, in welcher ein relativ fettes Gemisch oder bevorzugt reiner Kraftstoff (der über eine eigene Zuführvorrichtung der Vorkammer zugeführt werden kann - sogenannte gespülte Vorkammer) gezündet wird und von der aus Zündfackeln in den Brennraum eintreten. Bei einer gespülten Vorkammer ist üblicherweise vorgesehen, dass ungefähr die Hälfte der Energie in der Vorkammer zum Zündzeitpunkt aus dem Brennraum kommt, der Rest wird durch die eigene Kraftstoff- oder Gemischzufuhr der Vorkammer geliefert. Ist nun z. B. ein Abmagern des Kraftstoff-Luft-Gemisches im Brennraum vorgesehen, erhält die Vorkammer weniger Energie und zündet dann nicht mehr, wenn z. B. zu viele Ablagerungen oder dgl. in der Vorkammer selbst, einer Zündkerze der Vorkammer oder der Zuführvorrichtung (z. B. Ventil für Gas oder ein Gas-Luft-Gemisch) der Vorkammer vorhanden sind.

Bevorzugt kann vorgesehen sein, dass der Sensor, dessen Signale charakteristisch für das Verbrennungsereignis im wenigstens einen Brennraum sind, dazu ausgebildet ist, ein Senken der Abgastemperatur des Brennraums oder eine Verschlechterung der Laufruhe zu detektieren.

Bevorzugt ist vorgesehen, dass die Regeleinrichtung dazu ausgebildet ist, im Detektionsmodus den Zündverstärker zur Einbringung einer unveränderten Energiemenge in den wenigstens einen Brennraum anzusteuern. In diesem Fall erfolgt die Änderung der Luftüberschusszahl also nicht über den Zündverstärker, falls dieser an sich eine Einbringvorrichtung für Kraftstoff oder ein Kraftstoff-Luft-Gemisch aufweist, sondern das Gemisch im Brennraum wird verändert. Dies ist besonders dann vorteilhaft, wenn die Zufuhr von Kraftstoff oder Kraftstoff-Luft-Gemisch des Zündverstärkers passiv ausgebildet ist, d. h. selbst nicht direkt beeinflusst werden kann. Ganz allgemein kann unabhängig vom hier besprochenen Ausführungsbeispiel die Änderung der Luftüberschusszahl des Kraftstoff-Luft-Gemisches für den wenigstens einen Brennraum durch die dem Fachmann geläufigen Verfahren durch die Aktuierung geeigneter Stellglieder erfolgen.

Um Leistungseinbrüche der Brennkraftmaschine im Detektionsmodus zu vermeiden, kann vorgesehen sein, dass die Regeleinrichtung dazu ausgebildet ist, den Ladedruck des dem wenigstens einen Brennraum über die Zuführvorrichtung zugeführten Kraftstoff-Luft-Gemisches derart zu ändern, dass der Effekt der geänderten Luftüberschusszahl des Kraftstoff-Luft-Gemisches auf die dem wenigstens einen Brennraum über die Zuführvorrichtung zugeführte Energie ausgleichbar ist. Diese Kompensation kann so erfolgen, indem die Kraftstoffmenge gleich gelassen wird und die Luftmenge entsprechend erhöht wird.

Die Änderung der Luftüberschusszahl im Detektionsmodus kann so erfolgen, dass die Luftüberschusszahl vergrößert oder verkleinert wird. Eine Vergrößerung der Luftüberschusszahl (Abmagern) bewirkt bei einer abnormalen Zuführvorrichtung, dass man gezielt einen Betriebspunkt anfährt, bei welchem der abnormale Zustand besonders auffällt. Eine Verkleinerung der Luftüberschusszahl (Anfetten) bewirkt bei einer abnormalen Zuführvorrichtung, dass man einen Betriebspunkt anfährt, bei welchem der abnormale Zustand (im Detektionsmodus) nicht mehr zum Tragen kommt. Die Verbrennung im Detektionsmodus ist dann unauffällig. Gibt es einen weiteren Brennraum mit einer Zuführvorrichtung mit im Normalbetrieb normalen Eigenschaften, wird es bei der Verbrennung im Detektionsmodus in diesem Brennraum zuerst noch zu keinen Auffälligkeiten kommen. Bei fortgesetztem Anfetten kann es zu Auffälligkeiten kommen, da der obere Toleranzbereich für eine Zündung erreicht wird.

Erfindungsgemäß ist vorgesehen, dass die Regeleinrichtung dazu ausgebildet ist, im Detektionsmodus zu erkennen, ob die durch das Kraftstoff-Luft-Gemisch mit geänderter Luftüberschusszahl bewirkte Änderung des Verbrennungsereignisses einen Schwellwert erreicht oder passiert. Wird dieser Schwellwert erreicht oder passiert, wird ein Detektionssignal durch die Regeleinrichtung ausgegeben, welches den Zustand des zugehörigen Zündverstärkers als abnormal kennzeichnet. Der Schwellwert kann ein zuvor hinterlegter Wert in der Regeleinrichtung sein, welcher aus Erfahrungswerten, Messungen oder physikalischen Werten stammt. Es kann auch ein Toleranzband um den Schwellwert herum gelegt werden und das Detektionssignal erst bei Erreichen oder Passieren des Toleranzbandes ausgegeben werden.

Bevorzugt kann vorgesehen sein, dass die Regeleinrichtung dazu ausgebildet ist, im Detektionsmodus zu erkennen, ob der Gradient der durch das Kraftstoff-Luft-Gemisch mit geänderter Luftüberschusszahl bewirkten Änderung des Verbrennungsereignisses einen Schwellwert erreicht oder passiert. Es hat sich bei Messungen herausgestellt, dass bei Zündverstärkern mit abnormalem Verhalten eine schnellere Reaktion auf die Änderung der Luftüberschusszahl erfolgt. Wird dieser Schwellwert erreicht oder passiert, wird ein Detektionssignal durch die Regeleinrichtung ausgegeben, welches den Zustand des zugehörigen Zündverstärkers als abnormal kennzeichnet. Der Schwellwert kann ein zuvor hinterlegter Wert in der Regeleinrichtung sein, welcher aus Erfahrungswerten, Messungen oder physikalischen Werten stammt. Es kann auch ein Toleranzband um den Schwellwert herum gelegt werden und das Detektionssignal erst bei Erreichen oder Passieren des Toleranzbandes ausgegeben werden.

Bevorzugt kann vorgesehen sein, dass die Brennkraftmaschine wenigstens zwei Brennräume aufweist, denen jeweils ein Zündverstärker zugeordnet ist, wobei jedem der wenigstens zwei Brennräume ein Sensor zugeordnet ist, dessen Signale der Regeleinrichtung zuführbar sind und dessen Signale charakteristisch für das Verbrennungsereignis im zugeordneten Brennraum sind.

Bei einer solchen Brennkraftmaschine kann die Regeleinrichtung dazu ausgebildet sein, im Detektionsmodus die Signale der wenigstens zwei Brennräume zu vergleichen und festzustellen, bei welchem der wenigstens zwei Brennräume eine größere Veränderung in Reaktion auf die Änderung der Luftüberschusszahl stattgefunden hat. Für jenen Brennraum bei dem die größere Abweichung stattgefunden hat, kann die Regeleinrichtung ein Detektionssignal ausgeben welches den Zustand des zugehörigen Zündverstärkers als abnormal kennzeichnet.

Eine solche Brennkraftmaschine kann auch wenigstens drei Brennräume aufweisen, denen jeweils ein Zündverstärker zugeordnet ist, wobei jedem der wenigstens drei Brennräume ein Sensor zugeordnet ist, dessen Signale der Regeleinrichtung zuführbar sind und dessen Signale charakteristisch für das Verbrennungsereignis im zugeordneten Brennraum sind. Wobei die Regeleinrichtung dazu ausgebildet ist, zu erkennen, bei welchem der wenigstens drei Brennräume die größte Änderung relativ zu einer vorgegebenen statistischen Kennzahl stattgefunden hat. Für jenen Brennraum bei dem die größere Abweichung stattgefunden hat, kann die Regeleinrichtung ein Detektionssignal ausgeben welches den Zustand des zugehörigen Zündverstärkers als abnormal kennzeichnet.

Die Brennkraftmaschine kann auch eine Vielzahl von Brennräumen mit zugeordneten Zündverstärkern aufweisen und die Regeleinrichtung kann dazu ausgebildet sein, dass sie im Detektionsmodus selektiv für einzelne oder mehrere Brennräume die Luftüberschusszahl ändert, um so ein Detektionssignal zu erzeugen, welches den Zustand des zugehörigen Zündverstärkers als abnormal kennzeichnet.

Beispiele für mögliche Sensoren, deren Signale charakteristisch für das Verbrennungsereignis im wenigstens einen Brennraum sind:
- Temperatursensor für aus dem Brennraum abgegebenes Abgas oder den Brennraum selbst
- Zylinderdrucksensor
- Klopfsensor (Körperschallsensor)
- lonenstromsensor

Die Erfindung kann bevorzugt bei einer stationären Brennkraftmaschine, für Marineanwendungen oder mobile Anwendungen wie sogenannte "Non-Road- Mobile-Machinery" (NRMM) - vorzugsweise jeweils als Hubkolbenmaschine - eingesetzt werden. Die Brennkraftmaschine kann als mechanischer Antrieb dienen, z. B. zum Betreiben von Verdichteranlagen oder mit einem Generator zu einem Gensets zur Erzeugung elektrischer Energie gekoppelt sein.

Als Kraftstoff zur Verbrennung in den Brennräumen kommt bevorzugt Gas (z. B. Erdgas) zum Einsatz.

Ausführungsbeispiele der Erfindung werden anhand der Figuren diskutiert.

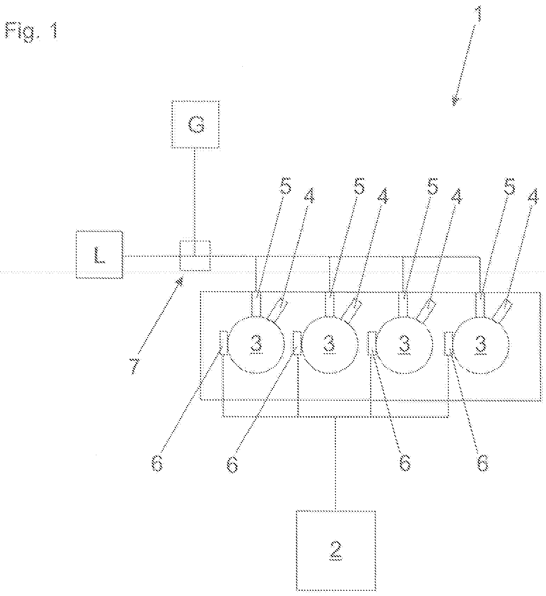

Figur 1 zeigt schematisch den Aufbau einer erfindungsgemäßen Brennkraftmaschine 1. Zu erkennen sind:
- eine Regeleinrichtung 2
- Brennräume 3
- den Brennräumen 3 zugeordnete Zündverstärker 4
- den Brennräumen 3 zugeordnete Zuführvorrichtungen 5
- den Brennräumen 3 zugeordnete Sensoren 6

Die Zuführvorrichtungen werden mittels eines Gasmischers 7 versorgt, welcher Gasmischer 7 Luft L und Kraftstoff (in diesem Fall Gas G) zu einem Gas-Luft-Gemisch mischt, welches eine gewisse Luftüberschusszahl λ aufweist. Die Luftüberschusszahl λ kann mittels verschiedener Stellglieder beeinflusst werden. Beispiele wären neben dem Gasmischer 7 eine Turbo-Bypass-Leitung, ein Wastegate oder anderen Fachleuten bekannte Stellglieder. Zuführvorrichtungen für die Zündverstärker 4 (hier Vorkammer) sind nicht dargestellt, weil sie dem Stand der Technik entsprechen (z. B. mit einer Quelle für ein Gas oder Gas-Luft-Gemisch verbundene Vorkammergasventile).

Die Anordnung der Sensoren 6 ist rein schematisch zu verstehen und hängt von der Wahl der Art der Sensoren 6 ab.

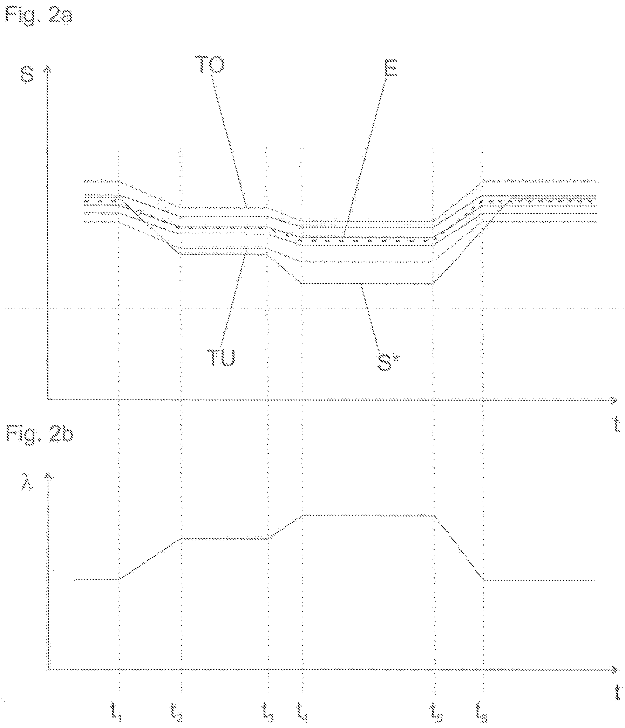

Figuren 2a und 2b zeigen schematisch die Signale S (durchgezogen) unterschiedlichen Brennräumen 3 (hier exemplarisch vier verschiedene Brennräume 3) zugeordneter Sensoren 6 beziehungsweise die Luftüberschusszahl λ in Abhängigkeit von der Zeit t. Im vorliegenden Fall wurde ein Signal S* gewählt, dessen zu starkes oder schnelles Absinken auf ein abnormales Verhalten hindeutet, z. B. ein Temperatursignal.

Zum Zeitpunkt t₁ bis zum Zeitpunkt t₂ erfolgt für alle vier Brennräume 3 eine erste Änderung der Luftüberschusszahl λ, hier in Richtung eines Abmagerns. Zwischen den Zeitpunkten t₂ und t₃ wird die Luftüberschusszahl λ konstant gehalten. Zum Zeitpunkt t₃ bis zum Zeitpunkt t₄ erfolgt für alle vier Brennräume 3 eine zweite Änderung der Luftüberschusszahl λ, hier in Richtung eines Abmagerns. Zwischen den Zeitpunkten t₄ und t₅ wird die Luftüberschusszahl λ konstant gehalten. Zum Zeitpunkt t₅ bis zum Zeitpunkt t₆ erfolgt für alle vier Brennräume 3 eine dritte Änderung der Luftüberschusszahl λ auf einen konstanten Wert. Die Regeleinrichtung 2 befindet sich zwischen den Zeitpunkten t₁ und t₆ im Detektionsmodus.

Man erkennt, dass im vorliegenden Beispiel die Signale S außer S* ein ähnliches Verhalten aufweisen. Das Signal S* weist ein auffälliges Verhalten auf, denn dieses Signal S* sinkt schneller und stärker ab. Die Regeleinrichtung 2 kann so ein Detektionssignal erzeugen, welches aussagt, dass der diesem Brennraum 3 zugeordnete Zündverstärker 4 (derzeit nur im Belastungsfall) abnormal reagiert und daher zu überprüfen oder auszutauschen ist.

Die drei unauffälligen Signale S können zur Bildung einer statistischen Kennzahl in Form eines Erwartungswertes E oder eines Medians verwendet werden. Eine solche Kennzahl kann auch aus einem Modell stammen. Über den Erwartungswert E kann durch Festsetzen eines maximalen Abstandes vom Erwartungswert E ein Toleranzband definiert werden. In Figur 2a ist das Toleranzband durch seine Obergrenze TO und seine Untergrenze TU (beide punktiert gezeichnet) verdeutlicht. Das Detektionssignal kann bei Überschreiten des eingezeichneten Toleranzbandes erzeugt werden. Alternativ kann das Detektionssignal erzeugt werden, wenn ein Gradient eines Signals S* einen Grenzwert überschreitet. Analog kann auch der Grenzwert für den Gradienten aus einer statistischen Kennzahl (bspw. Median oder Mittelwert), beispielsweise mit einem Offset, ermittelt werden.

## Patentansprüche

1. Brennkraftmaschine (1) mit einer Regeleinrichtung (2) und wenigstens einem Brennraum (3) und einem dem wenigstens einen Brennraum (3) zugeordneten Zündverstärker (4), wobei
- der Zündverstärker (4) als Zündkerze ausgebildet ist oder
- wobei der Zündverstärker (4) eine Einbringvorrichtung für Kraftstoff oder ein Kraftstoff-Luft-Gemisch aufweist und als Vorkammer oder Injektor für einen flüssigen Kraftstoff ausgebildet ist,
wobei dem wenigstens einen Brennraum (3) einerseits über eine Zuführvorrichtung (5) für ein Kraftstoff-Luft-Gemisch Energie zuführbar ist und andererseits durch den zugeordneten Zündverstärker (4) Energie zuführbar ist, wobei die Regeleinrichtung (2) dazu ausgebildet ist, in einem Detektionsmodus für den wenigstens einen Brennraum (3) die Luftüberschusszahl (λ) des Kraftstoff-Luft-Gemisches zu ändern, und zumindest ein Sensor (6) vorgesehen ist, dessen Signale der Regeleinrichtung (2) zuführbar sind und dessen Signale charakteristisch für das Verbrennungsereignis im wenigstens einen Brennraum (3) sind und wobei die Regeleinrichtung (2) dazu ausgebildet ist,
- im Detektionsmodus zu erkennen, ob die durch das Kraftstoff-Luft-Gemisch mit geänderter Luftüberschusszahl (λ) bewirkte Änderung des Verbrennungsereignisses einen Schwellwert erreicht oder passiert, und
- in Abhängigkeit der vom zumindest einen Sensor (6) zugeführten Signale ein für einen Zustand des dem wenigstens einen Brennraum (3) zugeordneten zumindest einen Zündverstärkers (4) repräsentatives Detektionssignal zu erzeugen.

2. Brennkraftmaschine nach Anspruch 1, wobei die Regeleinrichtung (2) dazu ausgebildet ist, im Detektionsmodus den Zündverstärker (4) zur Einbringung einer unveränderten Energiemenge in den wenigstens einen Brennraum (3) anzusteuern.

3. Brennkraftmaschine nach wenigstens einem der vorangehenden Ansprüche, wobei die Regeleinrichtung (2) dazu ausgebildet ist, den Ladedruck des dem wenigstens einen Brennraum (3) über die Zuführvorrichtung (5) zugeführten Kraftstoff-Luft-Gemisches derart zu ändern, dass der Effekt der geänderten Luftüberschusszahl (λ) des Kraftstoff-Luft-Gemisches auf die dem wenigstens einen Brennraum (3) über die Zuführvorrichtung (5) zugeführte Energie ausgleichbar ist.

4. Brennkraftmaschine nach wenigstens einem der vorangehenden Ansprüche, wobei die Regeleinrichtung (2) dazu ausgebildet ist, im Detektionsmodus die Luftüberschusszahl (λ) zu vergrößern.

5. Brennkraftmaschine nach wenigstens einem der vorangehenden Ansprüche, wobei die Regeleinrichtung (2) dazu ausgebildet ist, im Detektionsmodus die Luftüberschusszahl (λ) zu verkleinern.

6. Brennkraftmaschine nach wenigstens einem der vorangehenden Ansprüche, wobei die Regeleinrichtung (2) dazu ausgebildet ist, im Detektionsmodus zu erkennen, ob der Gradient der durch das Kraftstoff-Luft-Gemisch mit geänderter Luftüberschusszahl (λ) bewirkten Änderung des Verbrennungsereignisses einen Schwellwert erreicht oder passiert.

7. Brennkraftmaschine nach wenigstens einem der vorangehenden Ansprüche, wobei wenigstens zwei Brennräume (3) vorgesehen sind, denen jeweils ein Zündverstärker (4) zugeordnet ist, wobei jedem der wenigstens zwei Brennräume (3) ein Sensor (6) zugeordnet ist, dessen Signale der Regeleinrichtung (2) zuführbar sind und dessen Signale charakteristisch für das Verbrennungsereignis im zugeordneten Brennraum (3) sind.

8. Brennkraftmaschine nach Anspruch 7, wobei die Regeleinrichtung (2) dazu ausgebildet ist, im Detektionsmodus die Signale der wenigstens zwei Brennräume (3) zu vergleichen und festzustellen, bei welchem der wenigstens zwei Brennräume (3) eine größere Veränderung in Reaktion auf die Änderung der Luftüberschusszahl (λ) stattgefunden ist.

9. Brennkraftmaschine nach Anspruch 7, wobei wenigstens drei Brennräume (3) vorgesehen sind, denen jeweils ein Zündverstärker (4) zugeordnet ist, wobei jedem der wenigstens drei Brennräume (3) ein Sensor (6) zugeordnet ist, dessen Signale der Regeleinrichtung (2) zuführbar sind und dessen Signale charakteristisch für das Verbrennungsereignis im zugeordneten Brennraum (3) sind, wobei die Regeleinrichtung (2) dazu ausgebildet ist, zu erkennen, bei welchem der wenigstens drei Brennräume (3) die größte Änderung relativ zu einer vorgegebenen statistischen Kennzahl stattgefunden hat.

10. Brennkraftmaschine nach wenigstens einem der vorangehenden Ansprüche, wobei die Brennkraftmaschine (1) eine Vielzahl von Brennräumen (3) mit zugeordneten Zündverstärkern (4) aufweist und die Regeleinrichtung (2) dazu ausgebildet ist, im Detektionsmodus selektiv für einzelne oder mehrere Brennräume (3) die Luftüberschusszahl (λ) zu ändern und das Detektionssignal zu erzeugen.

11. Brennkraftmaschine nach wenigstens einem der vorangehenden Ansprüche, wobei der Sensor (6), dessen Signale charakteristisch für das Verbrennungsereignis im wenigstens einen Brennraum (3) sind, dazu ausgebildet ist, ein Senken der Abgastemperatur des wenigstens einen Brennraums (3) oder eine Verschlechterung der Laufruhe zu detektieren.

12. Verfahren zur Überprüfung des Zustands eines wenigstens einem Brennraum (3) einer Brennkraftmaschine (1) zugeordneten Zündverstärkers (4), wobei als Zündverstärker (4) eine Zündkerze verwendet wird oder wobei als Zündverstärker (4) eine Vorkammer oder ein Injektor für einen flüssigen Kraftstoff mit einer Einbringvorrichtung für Kraftstoff oder ein Kraftstoff-Luft-Gemisch verwendet wird, wobei
- für den wenigstens einen Brennraum (3) die Luftüberschusszahl (λ) eines Kraftstoff-Luft-Gemisches geändert wird,
- überprüft wird, ob die durch das Kraftstoff-Luft-Gemisch mit geänderter Luftüberschusszahl (λ) bewirkte Änderung des Verbrennungsereignisses einen Schwellwert erreicht oder passiert, und
- in Abhängigkeit eines für ein Verbrennungsereignis im wenigstens einen Brennraum (3) charakteristischen Signals auf den Zustand des dem wenigstens einen Brennraum (3) zugeordneten Zündverstärkers (4) rückgeschlossen wird.

## Claims

1. Internal combustion engine (1) with a control device (2) and at least one combustion chamber (3) and an ignition amplifier (4) assigned to the at least one combustion chamber (3), wherein
- the ignition amplifier (4) is designed as a spark plug or
- wherein the ignition amplifier (4) has a device for introducing fuel or a fuel-air mixture and is designed as a precombustion chamber or injector for a liquid fuel,
wherein the at least one combustion chamber (3) can be supplied with energy on the one hand via a supply device (5) for a fuel-air mixture and can be supplied with energy on the other hand by the assigned ignition amplifier (4), wherein the control device (2) is designed, in a detection mode, to change the excess air coefficient (λ) of the fuel-air mixture for the at least one combustion chamber (3), and at least one sensor (6) is provided, the signals of which can be supplied to the control device (2) and the signals of which are characteristic of the combustion event in the at least one combustion chamber (3), and wherein the control device (2) is designed,
- in detection mode, to recognize whether the change in the combustion event caused by the fuel-air mixture with a changed excess air coefficient (λ) reaches or exceeds a threshold value, and
- to generate a detection signal representative of a state of the at least one ignition amplifier (4) assigned to the at least one combustion chamber (3) as a function of the signals supplied by the at least one sensor (6).

2. Internal combustion engine according to claim 1, wherein the control device (2) is designed, in detection mode, to actuate the ignition amplifier (4) to introduce an unchanged amount of energy into the at least one combustion chamber (3).

3. Internal combustion engine according to at least one of the preceding claims, wherein the control device (2) is designed to change the charge-air pressure of the fuel-air mixture supplied to the at least one combustion chamber (3) via the supply device (5) in such a way that the effect of the changed excess air coefficient (λ) of the fuel-air mixture on the energy supplied to the at least one combustion chamber (3) via the supply device (5) can be compensated for.

4. Internal combustion engine according to at least one of the preceding claims, wherein the control device (2) is designed, in detection mode, to increase the excess air coefficient (λ).

5. Internal combustion engine according to at least one of the preceding claims, wherein the control device (2) is designed, in detection mode, to reduce the excess air coefficient (λ).

6. Internal combustion engine according to at least one of the preceding claims, wherein the control device (2) is designed, in detection mode, to recognize whether the gradient of the change in the combustion event caused by the fuel-air mixture with a changed excess air coefficient (λ) reaches or exceeds a threshold value.

7. Internal combustion engine according to at least one of the preceding claims, wherein at least two combustion chambers (3) are provided, each of which is assigned an ignition amplifier (4), wherein each of the at least two combustion chambers (3) is assigned a sensor (6), the signals of which can be supplied to the control device (2) and the signals of which are characteristic of the combustion event in the assigned combustion chamber (3).

8. Internal combustion engine according to claim 7, wherein the control device (2) is designed, in detection mode, to compare the signals of the at least two combustion chambers (3) and to determine in which of the at least two combustion chambers (3) a greater change has occurred in response to the change in the excess air coefficient (λ) .

9. Internal combustion engine according to claim 7, wherein at least three combustion chambers (3) are provided, each of which is assigned an ignition amplifier (4), wherein each of the at least three combustion chambers (3) is assigned a sensor (6), the signals of which can be supplied to the control device (2) and the signals of which are characteristic of the combustion event in the assigned combustion chamber (3), wherein the control device (2) is designed to recognize in which of the at least three combustion chambers (3) the greatest change has occurred relative to a predefined statistical characteristic number.

10. Internal combustion engine according to at least one of the preceding claims, wherein the internal combustion engine (1) has a plurality of combustion chambers (3) with assigned ignition amplifiers (4) and the control device (2) is designed, in detection mode, to selectively change the excess air coefficient (λ) for single or multiple combustion chambers (3) and to generate the detection signal.

11. Internal combustion engine according to at least one of the preceding claims, wherein the sensor (6), the signals of which are characteristic of the combustion event in the at least one combustion chamber (3), is designed to detect a drop in the exhaust gas temperature of the at least one combustion chamber (3) or a deterioration in the running smoothness.

12. Method for checking the state of an ignition amplifier (4) assigned to at least one combustion chamber (3) of an internal combustion engine (1), wherein a spark plug is used as ignition amplifier (4) or wherein a precombustion chamber or an injector for a liquid fuel with a device for introducing fuel or a fuel-air mixture is used as ignition amplifier (4), wherein
- the excess air coefficient (λ) of a fuel-air mixture is changed for the at least one combustion chamber (3),
- it is checked whether the change in the combustion event caused by the fuel-air mixture with a changed excess air coefficient (λ) reaches or exceeds a threshold value, and
- the state of the ignition amplifier (4) assigned to the at least one combustion chamber (3) is inferred as a function of a signal that is characteristic of a combustion event in the at least one combustion chamber (3) .

## Revendications

1. Moteur à combustion interne (1) avec un système de régulation (2) et au moins une chambre de combustion (3) et un amplificateur d'allumage (4) associé à l'au moins une chambre de combustion (3), dans lequel
- l'amplificateur d'allumage (4) est réalisé en tant que bougie d'allumage ou
- dans lequel l'amplificateur d'allumage (4) présente un dispositif d'introduction pour du carburant ou un mélange d'air-de carburant et est réalisé en tant que préchambre ou injecteur pour un carburant liquide,
dans lequel de l'énergie peut être amenée à l'au moins une chambre de combustion (3) d'une part par l'intermédiaire d'un dispositif d'amenée (5) pour un mélange d'air-de carburant et de l'énergie peut être amenée d'autre part par l'amplificateur d'allumage (4) associé, dans lequel
le système de régulation (2) est réalisé pour modifier, dans un mode de détection, pour l'au moins une chambre de combustion (3), le coefficient d'excès d'air (À) du mélange d'air-de carburant, et au moins un capteur (6) est prévu, dont les signaux peuvent être amenés au système de régulation (2) et dont les signaux sont caractéristiques de l'événement de combustion dans l'au moins une chambre de combustion (3) et dans lequel le système de régulation (2) est réalisé
- pour identifier dans le mode de détection si la modification, provoquée par le mélange d'air-de carburant avec un coefficient d'excès d'air (À) modifié, de l'événement de combustion atteint ou passe une valeur de seuil, et
- pour produire, en fonction des signaux amenés par l'au moins un capteur (6), un signal de détection représentatif d'un état de l'au moins un amplificateur d'allumage (4) associé à l'au moins une chambre de combustion (3).

2. Moteur à combustion interne selon la revendication 1, dans lequel le système de régulation (2) est réalisé pour piloter, dans le mode de détection, l'amplificateur d'allumage (4) pour introduire une quantité d'énergie non modifiée dans l'au moins une chambre de combustion (3).

3. Moteur à combustion interne selon au moins l'une quelconque des revendications précédentes, dans lequel le système de régulation (2) est réalisé pour modifier la pression de charge du mélange d'air-de carburant amené à l'au moins une chambre de combustion (3) par l'intermédiaire du dispositif d'amenée (5) de telle manière que l'effet du coefficient d'excès d'air (λ) modifié du mélange d'air-de carburant peut être compensé sur l'énergie amenée à l'au moins une chambre de combustion (3) par l'intermédiaire du dispositif d'amenée (5).

4. Moteur à combustion interne selon au moins l'une quelconque des revendications précédentes, dans lequel le système de régulation (2) est réalisé pour augmenter le coefficient d'excès d'air (À) dans le mode de détection.

5. Moteur à combustion interne selon au moins l'une quelconque des revendications précédentes, dans lequel le système de régulation (2) est réalisé pour réduire le coefficient d'excès d'air (À) dans le mode de détection.

6. Moteur à combustion interne selon au moins l'une quelconque des revendications précédentes, dans lequel le système de régulation (2) est réalisé pour identifier dans le mode de détection si le gradient de la modification, provoquée par le mélange d'air-de carburant avec un coefficient d'excès d'air (À) modifié, de l'événement de combustion atteint ou passe une valeur de seuil.

7. Moteur à combustion interne selon au moins l'une quelconque des revendications précédentes, dans lequel sont prévues au moins deux chambres de combustion (3), auxquelles respectivement un amplificateur d'allumage (4) est associé, dans lequel est associé, à chacune des au moins deux chambres de combustion (3), un capteur (6) dont les signaux peuvent être amenés au système de régulation (2) et dont les signaux sont caractéristiques de l'événement de combustion dans la chambre de combustion (3) associée.

8. Moteur à combustion interne selon la revendication 7, dans lequel le système de régulation (2) est réalisé pour comparer, dans le mode de détection, les signaux des au moins deux chambres de combustion (3) et constater, dans laquelle des au moins deux chambres de combustion (3), une modification plus importante a eu lieu en réaction à la modification du coefficient d'excès d'air (λ).

9. Moteur à combustion interne selon la revendication 7, dans lequel sont prévues au moins trois chambres de combustion (3), auxquelles respectivement un amplificateur d'allumage (4) est associé, dans lequel est associé à chacune des au moins trois chambres de combustion (3) un capteur (6), dont les signaux peuvent être amenés au système de régulation (2) et dont les signaux sont caractéristiques de l'événement de combustion dans la chambre de combustion (3) associée, dans lequel le système de régulation (2) est réalisé pour identifier dans laquelle des au moins trois chambres de combustion (3), la modification la plus importante a eu lieu par rapport à un indicateur statistique spécifié.

10. Moteur à combustion interne selon au moins l'une quelconque des revendications précédentes, dans lequel le moteur à combustion interne (1) présente une pluralité de chambres de combustion (3) avec des amplificateurs d'allumage (4) associés et le système de régulation (2) est réalisé pour modifier, dans le mode de détection, de manière sélective, le coefficient d'excès d'air (λ) pour diverses ou plusieurs chambres de combustion (3) et pour produire le signal de détection.

11. Moteur à combustion interne selon au moins l'une quelconque des revendications précédentes, dans lequel le capteur (6), dont les signaux sont caractéristiques de l'événement de combustion dans l'au moins une chambre de combustion (3), est réalisé pour détecter un abaissement de la température de gaz d'échappement de l'au moins une chambre de combustion (3) ou une détérioration du parfait fonctionnement.

12. Procédé de surveillance de l'état d'un amplificateur d'allumage (4) associé à au moins une chambre de combustion (3) d'un moteur à combustion interne (1), dans lequel une bougie d'allumage est utilisée en tant qu'amplificateur d'allumage (4) ou dans lequel une préchambre ou un injecteur est utilisée/utilisé en tant qu'amplificateur d'allumage pour un carburant liquide avec un dispositif d'introduction pour du carburant ou un mélange d'air-de carburant,
dans lequel
- le coefficient d'excès d'air (λ) d'un mélange d'air-de carburant est modifié pour l'au moins une chambre de combustion (3),
- il est vérifié si la modification, provoquée par le mélange d'air-de carburant avec un coefficient d'excès d'air (λ) modifié, de l'événement de combustion atteint ou passe une valeur de seuil, et
- l'état de l'amplificateur d'allumage (4) associé à l'au moins une chambre de combustion (3) est déduit en fonction d'un signal caractéristique de l'événement de combustion dans l'au moins une chambre de combustion (3).
